Europäisches Patentamt

European Patent Office

Office européen des brevets

(11) Veröffentlichungsnummer: **0 288 922 B1**

# EUROPÄISCHE PATENTSCHRIFT

(45) Veröffentlichungstag der Patentschrift: **24.06.92**

(51) Int. Cl.⁵: **G01J 5/08**, H04N 5/335

(21) Anmeldenummer: **88106476.0**

(22) Anmeldetag: **22.04.88**

(54) **Wärmebild-Aufnahmegerät mit einem Multielement-Detektor.**

(30) Priorität: **29.04.87 DE 3714270**

(43) Veröffentlichungstag der Anmeldung:
**02.11.88 Patentblatt 88/44**

(45) Bekanntmachung des Hinweises auf die
Patenterteilung:
**24.06.92 Patentblatt 92/26**

(84) Benannte Vertragsstaaten:
**BE CH DE FR GB IT LI NL SE**

(56) Entgegenhaltungen:
**DE-A- 2 233 820**
**GB-A- 2 167 206**
**US-A- 3 056 062**

(73) Patentinhaber: **Menke, Josef-Ferdinand,
Dipl.-Ing.
Fördestrasse 27
W-2392 Glücksburg(DE)**

(72) Erfinder: **Menke, Josef-Ferdinand, Dipl.-Ing.
Fördestrasse 27
W-2392 Glücksburg(DE)**

(74) Vertreter: **Riecke, Manfred
Neuköllner Strasse 8
W-6333 Braunfels(DE)**

## Beschreibung

Die Erfindung betrifft ein Wärmebild-Aufnahmegerät, das in Verbindung mit einem entsprechenden Wiedergabegerät, z.B. zur Erzeugung eines sichtbaren Bildes auf der Grundlage der eingefangenen Wärmestrahlen ( = Infrarotstrahlen = IR-Strahlen) verwendet wird.

Die Technik derartiger Wärmebildgeräte ist bekannt: Die von den Objektpunkten ausgehenden IR-Strahlen werden mittels eines Objektivs auf einen gekühlten Detektor fukussiert. Dem Objektiv ist ein Scan-Mechanismus nachgordnet, z.B. ein rotierendes Polygon mit unterschiedlich geneigten Polygonflächenpaaren, mit dem das Objektfeld zeilenweise abgetastet wird. Mit den von dem Detektor ausgehenden, der Intensität der IR-Strahlen analogen elektrischen Signalen wird eine Quelle sichtbaren Lichtes gesteuert, und mit den von dieser emittierten sichtbaren Lichtstrahlen, die in ihrer Intensität in jedem Moment der Intensität der IR-Strahlen entsprechen, wird über einen zweiten Scan-Mechanismus, der zum erstgenannten Scan-Mechanismus synchron arbeitet, ein sichtbares Bild zeilenweise auf einer Mattscheibe aufgebaut. Die Signale können aber auch einer Steuervorrichtung oder einem Servorechner zugeführt werden.

Wie bereits erwähnt muß der Detektor, um für die IR-Strahlen empfindlich zu sein, stark gekühlt werden. Außerdem muß sein Aufnahmewinkel genau definiert und auf den vorgeschalteten Scan-Mechanismus abgestimmt sein, d.h. dem Detektor muß eine Blende vorgeschaltet sein, die seine Apertur exakt definiert. Gleichzeitig muß aber sichergestellt sein, daß der Detektor nicht etwa Strahlung irgendwelcher Geräteteile aufnimmt, die sich als Störstrahlung auswirken würde.

Die beiden letztgenannten Bedingungen werden in bekannter Weise dadurch erfüllt, daß der Detektor etwa im Zentrum eines sphärischen Autokollimationsspiegels angeordnet wird, der auf seiner dem Detektor zugekehrten Seite verspiegelt ist, und der im Bereich der optischen Achse eine Öffnung besitzt, welche die Apertur des Detektors bestimmt. Dadurch wird der Detektor gegen geräteeigene Störstrahlung geschützt, d.h. er wird in Richtung zum Objektiv hin aus einem großen Raumwinkel heraus in sich selbst abgebildet, d.h. er "sieht" sich im Autokollimationsspiegel quasi immer nur selbst.

Die bisher geschilderten Merkmale derartiger Wärmebild-Aufnahmegeräte gehören zum Stand der Technik, und Geräte, die in dieser Weise aufgebaut sind, arbeiten insoweit durchaus zufriedenstellend.

Die Schwierigkeiten beginnen dann, wenn zur Beschleunigung des Scan-Vorganges (und des Bildaufbaues) ein Detektor verwendet wird, der nicht nur ein einziges Element hat, sondern aus einer in Scan-Richtung übereinander angeordneten oder flächenförmig aufgebauten Vielzahl von einzelnen Elementen besteht und somit einen Multielement-Detektor bildet. Eine derartige Detektor-Anordnung ist aus dem Dokument DE-A-2 233 820 bekannt.

Die Schwierigkeit besteht darin, daß die Abbildung des Detektors in sich selbst durch den Autokollimationsspiegel immer höhen- und seitenverkehrt ist. Dies ist ohne Bedeutung solange als Detektor nur ein einzelnes Element benutzt wird. Bei einem Multielement-Detektor ergeben sich jedoch Schwierigkeiten, weil nun plötzlich das unterste Einzelelement auf das oberste abgebildet wird, und das linke wird auf des rechte abgebildet bzw. jeweils umgekehrt.

Hätten alle Einzelelemente die gleiche Empfindlichkeit, so könnte diese höhen- und seitenverkehrte Abbildung durchaus in Kauf genommen werden. Tatsache ist aber leider, daß die einzelnen Elemente eben nicht gleichmäßig empfindlich sind, sondern daß ihre Empfindlichkeit - wenn auch geringfügig - unterschiedlich ist. Dies führt dazu, daß nun plötzlich ein weniger empfindliches Element auf ein höherempfindliches abgebildet wird, oder auch ein höherempfindliches Element auf ein niedriger empfindliches. Dies führt zu Störungen in der Abbildung und generell zu einer Empfindlichkeitsminderung des gesamten Multielement-Detektors.

Der Erfindung liegt die Aufgabe zugrunde, diese Nachteile zu vermeiden und ein Wärmebild-Aufnahmegerät mit Multielement-Detektor derart zu gestalten, daß durch den Autokollimationsspiegel jedes einzelne Element ausschließlich auf sich selbst abgebildet wird.

Diese Aufgabe ist durch ein Wärmebild-Aufnahmegerät gelöst, das die im Anspruch angegebenen Merkmale aufweist. Der der konkreten Lösung der Aufgabe zugrunde liegende Lösungsweg besteht darin, eine weitere Reflexion des Bildes des Multielement-Detektors herbeizuführen, die zunächst dieses Bild zum Autokollimationsspiegel zurückreflektiert, so daß an diesem Autokollimationsspiegel eine zweite Reflexion des zunächst höhen- und seitenverkehrten Bildes stattfindet, bei welcher zweiten Reflexion erneut eine Höhen- und Seitenvertauschung stattfindet, so daß im Endergebnis, nach zweimaliger Höhen- und Seitenvertauschung, ein höhen- und seitenrichtiges Bild auf den Multielement-Detektor zurückgeworfen wird, wobei dann jedes einzelne Element mit seinem eigenen Bild beaufschlagt wird.

In der Zeichnung ist die Erfindung unter Weglassung aller nicht erfindungswesentlichen Bauelemente in schematischer Form dargestellt. Es zeigen:

Fig. 1      schematisch die Abbildungsverhältnis-

2

se unter Benutzung eines nach dem Stand der Technik angeordneten Multielement-Detektor,

Fig. 2          schematisch die Abbildungsverhältnisse in einem Gerät, in dem der Multielement-Detektor gemäß der Erfindung angeordnet ist.

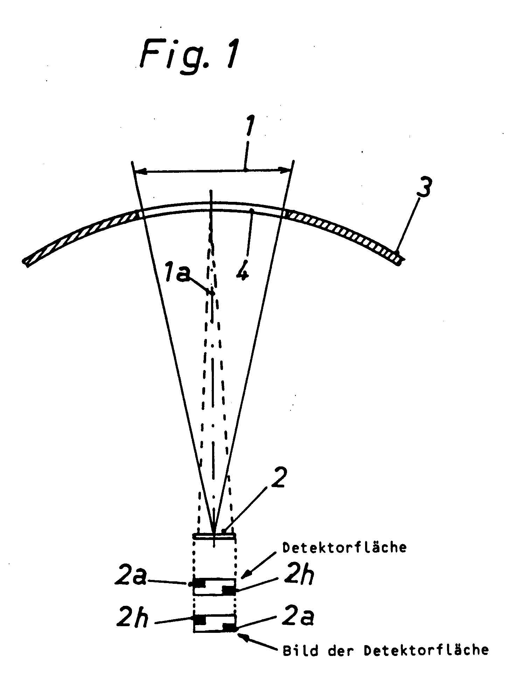

In Fig.1 ist mit 1 das Objektiv bezeichnet. 2 ist der Multielement-Detektor, in Form einer Fläche, mit den einzelnen Elementen 2a-2h, von denen jedoch nur diese beiden "End-Elemente" gezeigt sind. Zwischen dem Detektor 2 und dem Objektiv 1 ist ein innenverspiegelter Autokollimationsspiegel 3 angeordnet, der vor dem Objektiv eine Öffnung 4 besitzt, welche die Apertur des Detektors 2 definiert. In bekannter Weise wird dabei diese Öffnung 4 möglichst in bzw. nahe an die Pupille des Objektivs 1 gelegt.

Der Autokollimationsspiegel 3 ist hier als zweidimensionale Fläche dargestellt, die senkrecht zur Zeichenebene steht. Ein derartiger Spiegel bewirkt nur eine seitenverkehrte Abbildung. Diese Darstellung ist lediglich aus Gründen der Übersichtlichkeit gewählt. In den Wärmebild-Aufnahmegeräten handelt es sich dabei aber - wie jeder Fachmann weiß - um sphärische Spiegel, d.h. also um die Innenfläche einer Kugel, die sowohl eine seitenverkehrte als auch eine höhenverkehrte Abbildung bewirkt.

Unterhalb des Detektors 2 ist in der Figur schematisch die Fläche des Multielement-Detektors dargestellt.

Zu dieser Darstellung gelangt man, wenn man sich den darüberliegenden Detektor 2 um 90° nach vorne in die Zeichenebene geklappt vorstellt. Aus dieser Darstellung ist ersichtlich, daß der Multielement-Detektor aus den einzelnen Elementen 2a-2d in der einen Reihe und aus den Elementen 2e-2h in der anderen Reihe besteht, wobei der besseren Übersichtlichkeit halber nur die beiden End-Elemente 2a und 2h mit Bezugszeichen versehen sind.

Dabei stellt die in der Zeichnung obere Fläche den eigentlichen Detektor 2 dar, während die darunterliegende Fläche das Bild dieses Detektors nach Reflexion an dem Autokollimationsspiegel 3 veranschaulicht. In dieser Darstellung wird die durch die Spiegelung am Autokollimationsspiegel 3 bewirkte Höhen- und Seitenvertauschung des Detektor-Bildes besonders sinnfällig. Auf dem eigentlichen Detektor liegt das Element 2a links/unten, im Bild jedoch rechts/oben, während das Element 2h auf dem Detektor rechts/unten, im Bild jedoch links/oben liegt. In gleicher Weise ist auch die Position aller anderen Elemente im Detektor-Bild gegenüber dem eigentlichen Detektor höhen- und seitenvertauscht.

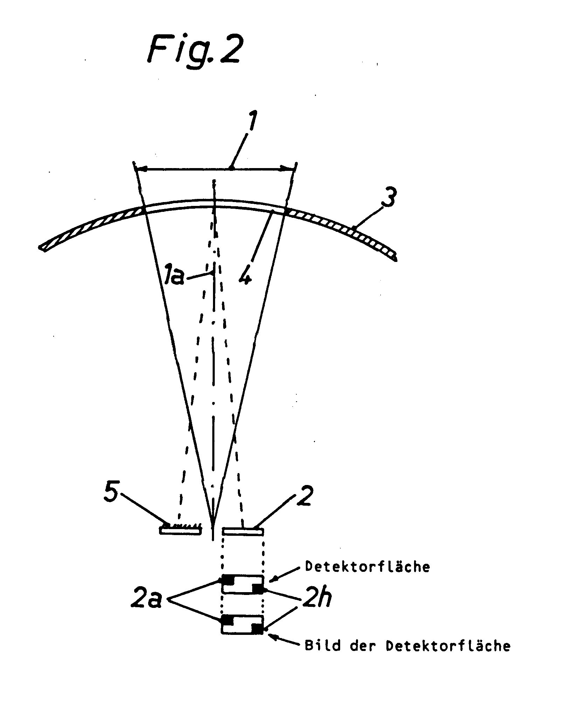

Fig.2 zeigt schematisch eine Anordnung gemäß der Erfindung, bei welcher diese Höhen- und Seitenvertauschung eliminiert ist. Mit 1 ist wiederum das Objektiv, mit 2 der Multielement-Detektor, mit 3 der Autokollimationsspiegel und mit 4 die aperturbegrenzende Öffnung bezeichnet.

Jedoch ist in dieser Anordnung der Detektor 2 nicht in die optische Achse gestellt, sondern er ist seitlich zur optischen Achse verschoben. Es ist nun offensichtlich, daß beim Verschieben des Detektors aus der optischen Achse heraus das vom Autokollimationsspiegel 3 entworfene Bild des Detektors ebenfalls seitlich auswandert, und zwar völlig symmetrisch zur optischen Achse, allerdings nach der entgegengesetzten Seite.

Der Erfindungsgedanke besteht nun darin, an diese Stelle, an der das Bild entworfen wird, einen Feldlinsenspiegel 5 zu stellen, der dieses Bild zum Autokollimationsspiegel 3 zurück reflektiert. Der Autokollimationsspiegel 3 seinerseits reflektiert dieses Bild auch wieder und wirft es zum Detektor 2 zurück. Bei dieser erneuten Reflexion am Autokollimationsspiegel 3 tritt nun nochmals eine Höhen- und Seitenvertauschung des Bildes ein, so daß im Endergebnis ein höhen- und seitenrichtiges Bild zum Detektor 2 zurückgelangt und jedes Einzelelement mit seinem eigenen Bild beaufschlagt wird.

Dies ist schematisch wiederum in den beiden unterhalb des Detektors 2 gezeigten Flächen veranschaulicht. Nach der doppelten Reflexion liegt das Bild des Einzelelementes 2a links/unten, d.h. an der gleichen Stelle, an der im Detektor selbst auch das Element 2a sitzt. Das gleiche gilt für das Element 2b und alle dazwischenliegenden Einzelelemente. Bei jedem fällt das Bild jedes Einzelelementes auf das jeweilige Einzelelement zurück.

Abschließend sei darauf hingewiesen, daß dieser Lösungsweg umso besser funktioniert und Abbildungsfehler eine umso geringere Rolle spielen, je kleiner die Abmessungen des Multielement-Detektors sind. Bei Multielement-Detektoren, die nur ein oder zwei Millimeter breit bzw. hoch sind (deren Einzelelemente demgemäß nur Abmessungen im Hundertstel-Millimeter-Bereich haben), braucht auch der seitliche Versatz des Detektors aus der optischen Achse heraus nur ein oder zwei Millimeter betragen, so daß - wie gesagt - Abbildungsfehler keine Rolle spielen.

Aber nicht nur die Abbildungsfehler spielen keine Rolle sondern es kann auch unberücksichtigt bleiben, daß bei der Verschiebung des Detektors seitlich zur optischen Achse der Detektor auch etwas seitlich zur Öffnung 4 steht und demgemäß der Detektor etwas schräg durch diese Öffnung "sieht".

**Patentansprüche**

1. Wärmebild-Aufnahmegerät mit einer Aufnahmeoptik und mit einem Multielement-Detektor, der etwa im Zentrum eines hohlkugelförmigen Autokollimationsspiegels angeordnet ist, der auf der dem Multielement-Detektor zugewandten Seite verspiegelt ist und nahe der Pupille der Optik eine Öffnung zur Begrenzung der Aufnahmeapertur des Multielement-Detektors besitzt,
dadurch gekennzeichnet, daß der Multielement-Detektor (2) in Höhe des Zentrums seitlich der optischen Achse (1a) angeordnet ist; daß an derjenigen Stelle jenseits der optischen Achse, an welcher der Autokollimationsspiegel (3) das Bild des Multielement-Detektors (2) entwirft, ein Feldlinsenspiegel (5) angeordnet ist, der das Bild des Multielement-Detektors (2) nach nochmaliger Reflexion an dem Autokollimationsspiegel (3) derart höhen- und seitenrichtig auf den Multielement-Detektor (2) wirft, daß jedes einzelne Detektorelement (2a-2h) mit seinem eigenen Bild beaufschlagt wird.

## Claims

1. Thermal image sensing apparatus with a sensing optical system and with a multi-element detector, which is arranged approximately at the centre of a hollow spherical autocollimation mirror, which is reflectively coated on the side facing the multi-element detector and which has near the pupil of the optical system an opening for limitation of the sensing aperture of the multi-element detector, characterised thereby that the multi-element detector (2) is arranged at the height of the centre and laterally of the optical axis (1a), and that a field lens mirror (5) is arranged at that position at the other side of the optical axis at which the autocollimation mirror (3) forms the image of the multi-element detector (2) and projects the image of the multi-element detector (2), after repeated reflection at the autocollimation mirror (3), in such a manner vertically and laterally correct onto the multi-element detector (2) that each individual detector element (2a to 2h) is acted on by its own image.

## Revendications

1. Appareil de prise de vues par rayonnement thermique comportant un système optique et un détecteur à éléments multiples, qui est disposé à peu près au centre d'un miroir à autocollimation en forme de sphère creuse, revêtu d'une couche réfléchissante sur la face orientée vers le détecteur à éléments multiples, et qui est pourvu à proximité de la pupille de l'optique d'une ouverture pour limiter l'ouverture de réception du détecteur à éléments multiples,
caractérisé en ce que le détecteur à éléments multiples (2) est disposé à la hauteur du centre latéralement à l'axe optique (1a) ; en ce qu'un miroir à lentille de champ (5) est disposé de l'autre côté de l'axe optique suivant la position dans laquelle le miroir à autocollimation (3) projette l'image du détecteur à éléments multiples (2), ce miroir à lentille de champ projetant l'image du détecteur à éléments multiples (2), après une nouvelle réflexion sur le miroir à autocollimation (3), de telle manière que dans le sens de la hauteur et dans le sens latéral sur le détecteur à éléments multiples (2), chaque élément individuel (2a à 2h) du détecteur reçoit sa propre image.

# Fig. 1

Detektorfläche

Bild der Detektorfläche

# Fig.2

Detektorfläche

Bild der Detektorfläche